# FASCICULE DE BREVET EUROPEEN

(11) **EP 3 273 003 B1**
(45) Date de publication et mention de la délivrance du brevet: **06.09.2023**
(21) Numéro de dépôt: 17187394.6
(22) Date de dépôt: 07.07.2014
(51) Int. Cl.: F01D 9/04

(54) **CAISSON À AUBES DE REDRESSEUR DE COMPRESSEUR DE TURBOMACHINE AXIALE**
LEITSCHAUFELSEGMENT EINES VERDICHTERS EINES AXIALEN TURBOTRIEBWERKS
VANE SEGMENT OF AN AXIAL TURBOMACHINE COMPRESSOR

(43) Date de publication de la demande: 24.01.2018
(62) Demande divisionnaire de: 14175924.1
(73) Titulaire: Safran Aero Boosters SA, 4041 Herstal (BE)
(72) Inventeur: DERCLAYE, Alain, 4218 Couthuin (BE)
(74) Mandataire: Lecomte & Partners

(56) Documents cités:
- EP-A1- 1 892 422
- EP-A1- 2 339 120
- EP-A1- 2 472 059
- EP-A2- 0 513 958
- WO-A1-2013/141941

## Description

### Domaine technique

L'invention a trait à un stator aubagé de turbomachine axiale. Plus précisément, l'invention a trait à un secteur angulaire de stator de turbomachine axiale formant un caisson aubagé. L'invention traite également d'une turbomachine munie d'un secteur de stator selon l'invention.

### Technique antérieure

La fonction de guidage de flux dans une turbomachine axiale est assurée par des portions de stators munies d'aubes. En particulier, un flux est dévié dans un compresseur axial à l'aide de redresseurs munis d'aubes s'étendant entre des viroles concentriques. La virole externe est fixée à un carter externe, et la virole interne est reliée à la virole interne grâce aux aubes.

Pour alléger le stator, il est connu de réaliser certaines viroles en matériau composite. Pour simplifier le montage du stator, les viroles peuvent être des demi-viroles, ou être des secteurs de virole qui s'étendent sur une fraction angulaire de la turbomachine. Puisque ce choix peut réduire la rigidité du stator, cet inconvénient peut être atténué en réalisant le stator sous forme de caissons aubagés disposés bout à bout.

Le document EP 2 339 120 A1 divulgue une architecture de redresseur de turbomachine axiale avec des caissons aubagés. Les caissons sont formés d'aubes aéro qui sont reliées à des viroles internes et externes. Les caissons ainsi formés sont fixés au carter externe du compresseur à l'aide d'aubes structurantes disposées entre les caissons aubagés. Cependant, la rigidité d'un tel stator reste limitée.

Le document EP 2 472 059 A1 divulgue un turboréacteur incluant une section de soufflante avec une rangée annulaire d'aubes composites. Chaque aube composite reçoit des ailerons internes.

Le document EP1892422 A1 divulgue un secteur angulaire de stator aubagé de turbomachine axiale dans lequel une aube statorique est fixée à une virole par l'intermédiaire d'une pièce rapportée.

### Résumé de l'invention

### Problème technique

L'invention a pour objectif de résoudre au moins un des problèmes posés par l'art antérieur. L'invention a également pour objectif d'améliorer la rigidité d'un secteur angulaire de stator formant un caisson aubagé. L'invention a également pour objectif d'améliorer la rigidité en torsion d'un secteur angulaire de stator formant un caisson aubagé.

### Solution technique

L'invention a trait à un secteur angulaire de stator aubagé de turbomachine axiale, notamment de compresseur, le secteur comprenant : une virole externe en forme d'arc de cercle et destinée à être montée sur un carter de la turbomachine, une virole interne en forme d'arc de cercle, une rangée d'aubes statoriques s'étendant radialement et ancrées dans les viroles de sorte à former un caisson aubagé, remarquable en ce qu'au moins une aube du caisson comprend une patte d'ancrage disposée dans l'épaisseur de l'une des viroles de sorte à ancrer l'aube à ladite virole pour rigidifier le caisson.

Selon un mode avantageux de l'invention, chaque aube de caisson comprend une pale s'étendant entre les viroles selon la direction radiale, les pattes d'ancrage s'étendant perpendiculairement à la direction radiale, et généralement perpendiculairement par rapport à la corde de la pale d'aube associée.

Selon un mode avantageux de l'invention, les pattes d'ancrage disposées à une même extrémité d'aube sont généralement plates et généralement courbes, ou sont parallèles et décalées l'une par rapport à l'autre selon la corde de ladite aube.

Selon un mode avantageux de l'invention, au moins une des viroles comprend une rangée d'ouvertures où sont ancrées les aubes, au moins une patte d'ancrage étant disposée dans l'ouverture du côté radialement opposé à l'autre des deux viroles.

Selon un mode avantageux de l'invention, les pattes d'ancrage s'étendent en direction des aubes voisines sur la majorité de la largeur des espaces entre les aubes voisines, préférentiellement les pattes d'ancrage occupent la totalité de la largeur des espaces entre les aubes voisines.

Selon un mode avantageux de l'invention, au moins une ou chaque patte d'ancrage affleure la surface de la virole associée, préférentiellement chaque extrémité d'aube comprend au moins une patte d'ancrage.

Selon un mode avantageux de l'invention, au moins une des viroles, éventuellement la virole externe, est réalisée en un matériau composite avec une matrice organique et une préforme fibreuse, et/ou au moins une des viroles, éventuellement la virole interne, est réalisée en un matériau composite avec une matrice organique et des fibres généralement orientées de manière aléatoire ou des fibres courtes, préférentiellement des fibres de la préforme joignent deux aubes voisines.

Selon un mode avantageux de l'invention, le secteur comprend entre trois et six aubes de caisson, préférentiellement il comprend quatre aubes de caisson métalliques, éventuellement en titane.

Selon un mode avantageux de l'invention, les viroles présentent des formes de rubans de matière avec des épaisseurs constantes entre les aubes de caissons et d'amont en aval, le secteur comprenant une couche annulaire de matériau abradable sur la surface interne de la virole interne, préférentiellement la couche d'abradable recouvre les extrémités internes des aubes de caissons.

Selon un mode avantageux de l'invention, chaque aube de caisson comprend au moins deux pattes d'ancrage à au moins une de ses extrémités radiales, préférentiellement l'une des deux pattes d'ancrage est située du côté intrados de l'aube à l'une des deux extrémités axiales de l'aube, et l'autre des deux pattes d'ancrage est située du côté extrados de l'aube à l'autre des deux extrémités axiales de l'aube.

Selon un mode avantageux de l'invention, les aubes de caisson comprennent au moins deux pattes d'ancrage disposées à une même extrémité radiale et un lien entre les au moins deux pattes d'ancrage, préférentiellement le lien s'étend parallèlement au profil de l'aube.

Selon un mode avantageux de l'invention, l'autre des deux viroles, éventuellement la virole interne, comprend des moignons d'ancrage faisant saillie par rapport à l'autre des deux viroles vers les aubes, les aubes étant ancrées aux moignons de sorte à s'ancrer à l'autre des deux viroles.

Selon un mode avantageux de l'invention, les viroles et les aubes statoriques définissent des canaux pour dévier un flux dans la turbomachine.

Selon un mode avantageux de l'invention, les fibres d'au moins une ou de chaque préforme sont généralement orientées à +45° et -45° par rapport à la direction axiale de la turbomachine.

Selon un mode avantageux de l'invention, les fibres courtes ont des longueurs inférieures à 5,00 mm, préférentiellement inférieures à 1,00 mm.

Selon un mode avantageux de l'invention, les pattes d'ancrage de chaque aube sont disposées sur un axe présentant une inclinaison inverse de la corde de l'aube par rapport à l'axe de rotation de la turbomachine.

Selon un mode avantageux de l'invention, les viroles sont adaptées pour délimiter entre elles une veine pour guider une portion angulaire de flux annulaire de la turbomachine.

Selon un mode avantageux de l'invention, la majorité numérique des fibres de la préforme entre les aubes de caisson s'étendent depuis une ouverture d'aube à l'ouverture d'aube voisine.

Selon un mode avantageux de l'invention, les aubes comprennent des pales s'étendant entre les viroles, chaque pale comprend un bord d'attaque, un bord de fuite, une surface intrados et une surface extrados, lesdites surfaces s'étendant du bord d'attaque au bord de fuite, les moignons étant disposés dans le prolongement des pales.

Selon un mode avantageux de l'invention, la hauteur radiale d'au moins un ou de chaque moignon est supérieure à l'épaisseur maximale de l'aube associée, préférentiellement la hauteur radiale d'au moins un ou de chaque moignon est supérieure à la largeur de l'aube.

La largeur de l'aube est mesurée perpendiculairement à sa corde. Par exemple, pour un profil donné, il peut s'agir du point de l'aube le plus éloigné de la corde.

Selon un mode avantageux de l'invention, la longueur de chaque patte d'ancrage est supérieure à la largeur moyenne de l'aube.

La longueur d'une patte peut être sa dimension principale et/ou être mesurée perpendiculairement à la corde de l'aube et/ou selon la circonférence du stator.

Selon un mode avantageux de l'invention, le matériau composite comprend une résine organique, éventuellement du PEI ou du PEEK, et des fibres de carbone ou des fibres de verre.

Selon un mode avantageux de l'invention, au moins une ou chaque patte d'ancrage est plus longue que large.

Selon un mode avantageux de l'invention, le secteur angulaire décrit moins d'un demi-cercle, préférentiellement moins d'un huitième de cercle, plus préférentiellement moins d'un vingtième de cercle.

La présence de patte d'ancrage sur une aube de caisson n'est pas un aspect essentiel de l'invention.

L'invention a également trait à un secteur angulaire de stator aubagé de turbomachine axiale, notamment de compresseur, le secteur comprenant : une virole externe en forme d'arc de cercle et destinée à être montée sur un carter de la turbomachine, une virole interne en forme d'arc de cercle, une rangée d'aubes statoriques s'étendant radialement entre les viroles, les aubes étant ancrées aux viroles de sorte à ce que le secteur forme un caisson aubagé apte à délimiter une veine entre les viroles, remarquable en ce qu'au moins une ou chaque virole comprend un moignon d'ancrage d'une des aubes de caisson, le moignon étant dans le prolongement radial de l'aube en faisant saillie dans la veine.

Selon un mode avantageux de l'invention, la ou chaque virole comprend plusieurs moignons d'ancrage d'aubes disposés en rangée, les moignons d'ancrage étant des fourreaux dans lesquels sont ancrées les aubes, et/ou les moignons comprennent des ailes enveloppées par les aubes.

L'invention a également trait à une turbomachine comprenant des secteurs angulaires de stator, remarquable en ce qu'au moins un ou chaque secteur est conforme à l'invention, la turbomachine comprenant un carter sur lequel sont fixés les secteurs angulaires et des aubes de jonction placées entre les secteurs de stator de sorte à former une alternance, les aubes de jonctions étant fixées au carter et aux secteurs de stator.

Selon un mode avantageux de l'invention, le carter est un carter externe composite avec une matrice organique et un renfort fibreux avec un empilement de plis fibreux, le ou chaque caisson aubagé étant fixé audit carter externe, au moins une ou chaque virole externe comprenant des orifices de fixation au carter externe, éventuellement munis d'oeillet métalliques, les orifices sont disposés entre les aubes du caisson.

### Avantages apportés

L'invention permet d'augmenter la rigidité du caisson et du stator, éventuellement indépendamment de la présence des aubes de jonction. La configuration détaillée des pattes d'ancrage augmente l'effet de bloc. En effet, leur implantation crée une armature interne dans l'épaisseur des viroles. Dans le cas de virole(s) composite(s), les pattes complètent l'action de renfort des fibres dans la matrice. Les pattes d'ancrage limitent le basculement des aubes par rapport aux viroles, tout comme les mouvements circonférentiels d'une virole par rapport à l'autre.

L'architecture à deux pattes à au moins une des extrémités d'aubes, par exemple à l'extérieur, peut permettre de dessiner une chaîne parcourant la virole associée. Le recours à une patte d'ancrage limite l'encombrement de l'ancrage dans une virole, ce qui permet de préserver la résistance mécanique de la virole tout en améliorant de la rigidité.

### Brève description des dessins

La figure 1 représente une turbomachine axiale selon l'invention.
La figure 2 est un schéma d'un compresseur de turbomachine selon l'invention.
La figure 3 illustre un carter de turbomachine avec un stator selon l'invention.
La figure 4 illustre une virole selon un premier mode de réalisation de l'invention.
La figure 5 illustre un caisson aubagé selon un premier mode de réalisation de l'invention.
La figure 6 illustre une aube de jonction selon l'invention.
La figure 7 illustre une coupe suivant l'axe 7-7 tracé sur la figure 4 d'un ancrage entre une patte d'ancrage et une virole selon l'invention.
La figure 8 esquisse une aube fixée à un moignon de virole de caisson aubagé selon un premier mode de réalisation de l'invention.
La figure 9 esquisse une aube fixée à un moignon de virole de caisson aubagé selon un deuxième mode de réalisation de l'invention.
La figure 10 ébauche un caisson aubagé selon un troisième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale.

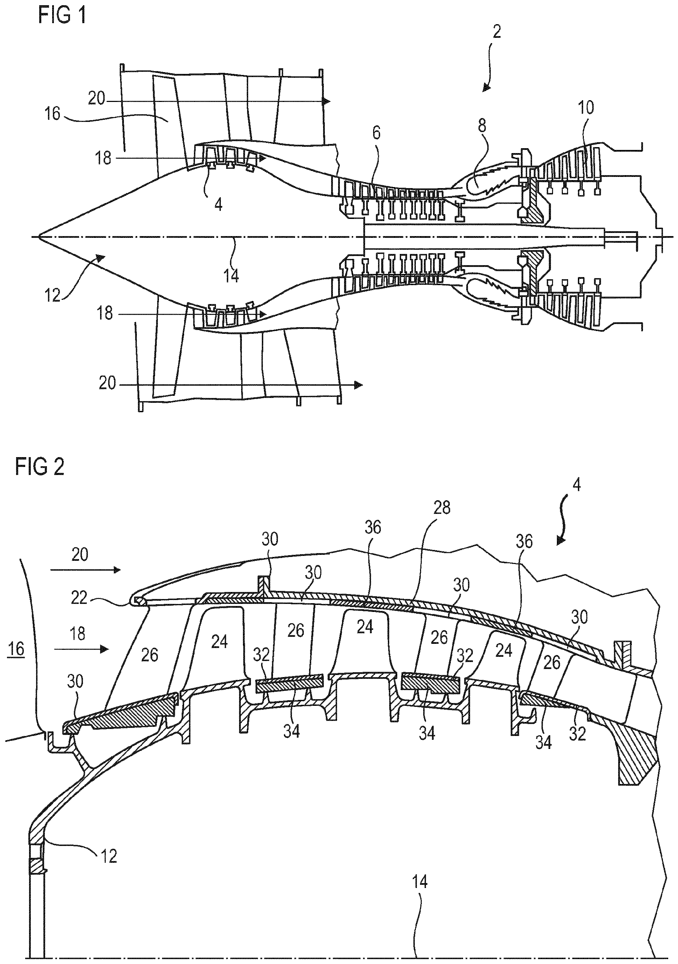

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur hautepression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction. Les flux primaire 18 et secondaire 20 sont des flux annulaires, ils sont canalisés par le carter de la turbomachine. A cet effet, le carter présente des parois cylindriques ou viroles qui peuvent être internes ou externes.

La figure 2 est une vue en coupe d'un compresseur d'une turbomachine axiale telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 sont régulièrement espacés les unes des autres, et présentent une même orientation angulaire dans le flux. Eventuellement, l'espacement entre les aubes peut varier localement tout comme leur orientation angulaire. Certaines aubes peuvent être différentes du reste des aubes de leur rangée.

La turbomachine peut comprendre un stator avec un carter 28, par exemple un carter externe de compresseur. Le carter 28 peut être métallique, tel en alliage de titane, ou réalisé en un matériau composite. Il comprend une paroi circulaire qui peut être reliée au carter intermédiaire de la turbomachine à l'aide d'une bride annulaire. Le carter peut également former un lien mécanique supportant le bec de séparation grâce à une bride annulaire. Il peut être formé de demi-coquilles.

Le carter 28 supporte en outre les aubes statoriques 26. Il peut les supporter directement ou via des viroles externes 30. Ces dernières servent de support de fixation pour les aubes statoriques 26, qui supportent elles-mêmes les viroles internes 32 à leurs extrémités internes. Des couches de matériau abradables 34 peuvent être appliquées à l'intérieur des viroles internes 32. D'autres couches de matériau abradable 36 peuvent être appliquées sur la surface interne du carter 28, éventuellement entre les viroles externes 30 qui forment des épaulements.

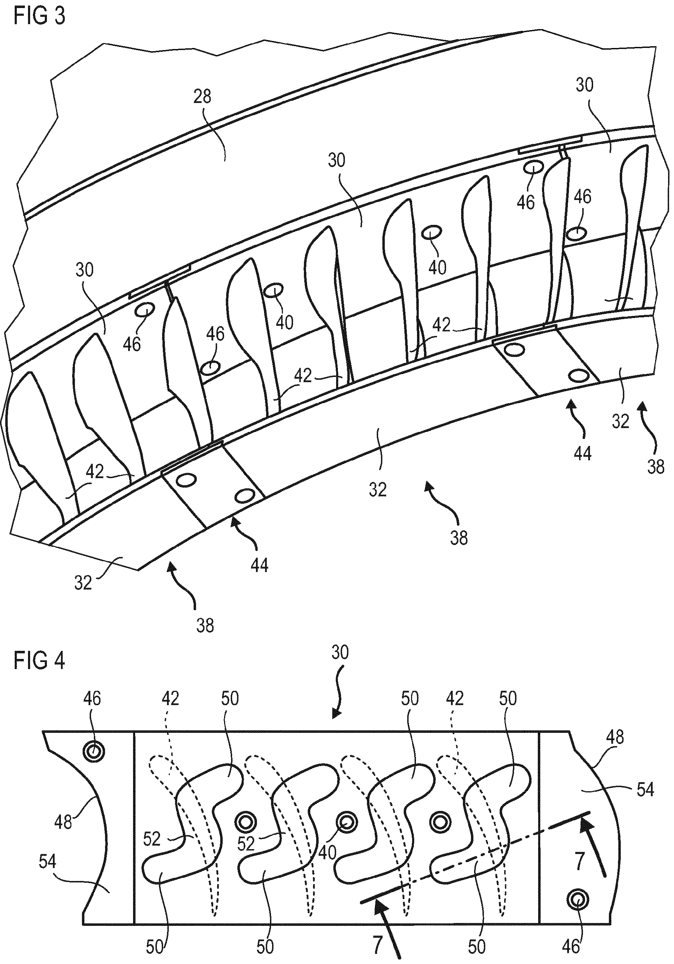

La figure 3 représente une portion de stator, telle une portion de rangée annulaire d'aubes statoriques fixées au carter. Le stator est vu depuis l'intérieur. La couche de matériau abradable appliquée sur la virole interne n'est pas représentée. Des portions d'aubes de caisson peuvent traverser les viroles internes, toutefois ces portions ne sont pas représentées.

Le stator comprend des secteurs angulaires 38 aubagés qui comportent plusieurs aubes. Un secteur angulaire peut être entendu comme une portion angulaire ou fraction angulaire du tour d'un étage de stator. L'angle considéré est par rapport à l'axe de rotation 14 de la turbomachine. Les secteurs angulaires 38 peuvent être des caissons aubagés 38 ou des segments angulaires aubagés. Ils peuvent être disposés bout à bout de sorte à décrire un cercle. Les secteurs 38 peuvent être fixés au carter 28 à l'aide d'orifices de fixation 40 disposés entre leurs aubes. Ils peuvent également être en contact selon la circonférence, et éventuellement être fixés les uns aux autres.

Chaque caisson 38 ou secteur 38 peut former une structure où chaque jonction entre une aube et l'une des viroles (30 ; 32), préférentiellement chaque virole (30 ; 32), est formée par un ancrage ou un scellement. L'ancrage permet de solidariser et d'immobiliser une aube par rapport à une virole.

Eventuellement, le stator peut comprendre au moins deux types d'aubes statoriques, à savoir des aubes de caisson 42, et des aubes de jonctions 44 disposées entre les caissons 38. Les aubes de jonction 44 peuvent former des liens mécaniques entre les caissons 38, leur présence est optionnelle. Les extrémités circonférentielles des viroles (30 ; 32) peuvent présenter des orifices de fixation 46 aux aubes de jonction 44. En particulier, les viroles externes 30 peuvent présenter à leurs extrémités, selon la circonférence, des orifices permettant leur réunion avec le carter 28 et les aubes de jonction 44, par exemple à l'aide de leurs plateformes de fixation.

La figure 4 représente une virole de caisson aubagé, par exemple une virole externe 30 vue depuis l'extérieur. Cette virole pourrait également correspondre à une virole interne vue depuis l'intérieur, éventuellement en adaptant l'orientation angulaire des aubes.

La virole 30 forme un secteur ou un segment. Elle peut présenter une forme de bande de matière, de longueur axiale et/ou d'épaisseur constante. Les tranches de ses extrémités 48 selon la circonférence peuvent être courbes, par exemple pour correspondre à un profil d'aube de jonction.

Afin de se fixer, par exemple selon un ancrage à l'une des viroles, éventuellement à chaque virole, au moins une aube de caisson 42 peut comprendre au moins une patte d'ancrage 50 à l'une de ses extrémités radiale. Eventuellement au moins une ou chaque aube 42 peut comprendre deux pattes d'ancrage 50 d'un même côté radial d'aube, ou au moins deux pattes d'ancrage à chaque extrémité radiale d'aube. Eventuellement, au moins une ou chaque aube comprend au moins une patte d'ancrage à chaque extrémité radiale.

Au moins une aube de caisson 42 ou chaque aube de caisson 42 peut comprendre du côté radialement externe deux pattes d'ancrage 50, éventuellement l'une du côté intrados, par exemple dans la moitié aval de l'aube ou au niveau axialement du bord de fuite ; et l'autre des deux pattes d'ancrage 50 du côté extrados, par exemple dans la moitié amont de l'aube 42 ou au niveau axialement du bord d'attaque.

Les pattes d'ancrage 50 peuvent s'étendre principalement selon la direction circonférentielle. Elles peuvent s'étendre en direction de l'aube 42 voisine, éventuellement perpendiculairement à la corde de l'extrémité radiale d'aube associée. Au moins une chaque extrémité d'aube comprend un lien 52 entre les au moins deux pattes d'ancrage, préférentiellement le lien 52 s'étend parallèlement au profil de l'aube. Au moins un ou chaque lien 52 peut présenter une continuité de section avec les pattes d'ancrage 50 de sorte à les renforcer face à un effort de torsion ou de flexion.

La distance maximale entre les pattes d'ancrage 50 peut être supérieure à la moitié de l'extrémité d'aube 42 associée. Cette distance maximale peut être mesurée sur un axe qui est incliné de plus de 30° par rapport à la corde de l'extrémité radiale d'aube 42 correspondante, préférentiellement plus de 45°, plus préférentiellement plus de 60°.

Les pattes d'ancrage 50 peuvent être généralement courbes et/ou généralement plates pour s'intégrer dans l'épaisseur de la virole 30 et/ou pour s'imbriquer. Les pattes d'ancrage 50 peuvent s'étendre en direction des aubes voisines 42 sur la majorité, préférentiellement sur la totalité, de la largeur des canaux entre les aubes voisines.

La virole 30 peut présenter des zones de liaison 54 à ses extrémités circonférentielles. Ces zones 54 peuvent permettre une fixation aux aubes de jonction et au carter grâce aux orifices 46, ces derniers pouvant remplacer les orifices 40 entre les aubes de caisson 42.

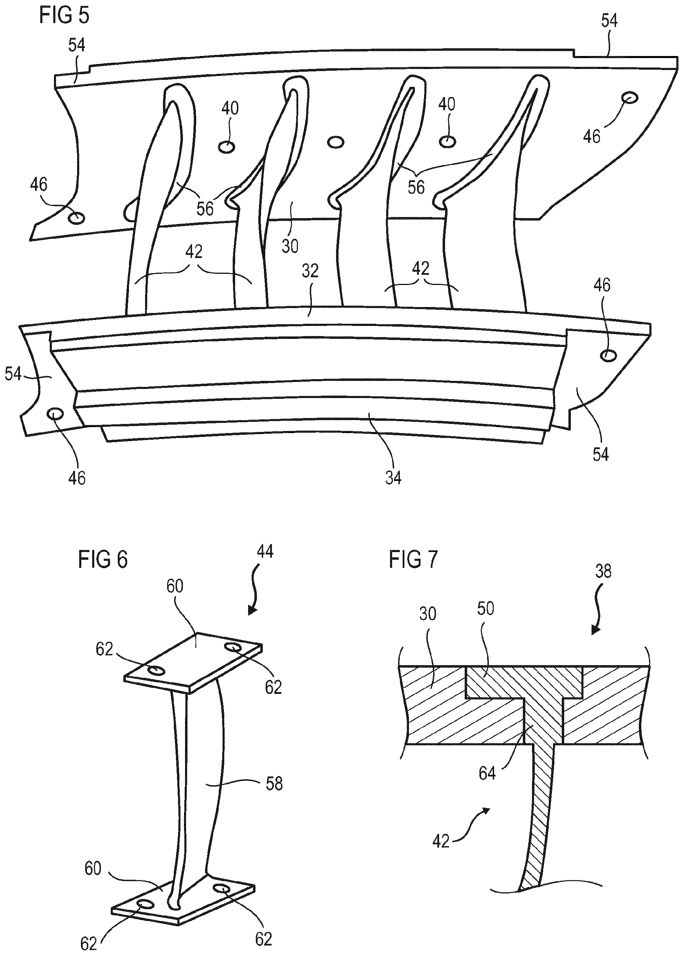

La figure 5 représente un secteur angulaire 38 qui forme un caisson aubagé de stator 38.

Les extrémités circonférentielles des viroles (30 ; 32) peuvent différer d'un côté à l'autre et d'une virole à l'autre. Les zones de liaison 54 peuvent être des zones de moindre épaisseur, par exemple pour intégrer dans l'épaisseur desdites viroles l'épaisseur des plateformes de fixation des aubes de jonction. Les zones de moindre épaisseur 54 de la virole externe 30 peuvent être disposées à l'extérieur, et les zones de moindre épaisseur 54 de la virole interne 32 peuvent être disposées à l'intérieur.

Le secteur 38 peut comprendre entre deux et dix, préférentiellement entre trois et sept, plus préférentiellement quatre aubes 42. Ces nombres permettent d'optimiser la rigidité d'un étage d'aubes statoriques grâce à l'association des aubes de jonction et des caissons 38. Les aubes peuvent être ancrées dans des ouvertures 56 formées dans les viroles (30 ; 32), les ouvertures 56 peuvent déboucher ou former des poches fermées.

Le secteur 38 peut comprendre une couche de matériau abradable 34 appliquée sur la surface interne de la virole interne 32. Cette couche 34 peut être profilée pour s'intégrer entre des nervures.

La figure 6 représente une aube de jonction 44.

L'aube de jonction 44 comprend un corps ou pale 58 qui s'étend dans le flux de la turbomachine. Elle comprend au moins une, préférentiellement au moins deux plateformes de fixation 60, chacune à une des extrémités radiale de l'aube 44. Au moins une ou chaque plateforme 58 comprend au moins un orifice de fixation 62, préférentiellement les deux plateformes 58 comprennent au moins deux orifices de fixation, l'un du côté intrados de l'aube, l'autre du côté extrados. L'aube de jonction 44 peut être fabriquée en métal, par exemple en alliage de titane ou d'aluminium. Elle peut être fabriquée par forgeage, par usinage, par fabrication additive.

La ou chaque plateforme interne 60 peut comprendre une couche de matériau abradable (non représentée) pour présenter une continuité de matière circulaire avec les couches d'abradable des caissons afin de former un joint circulaire, telle que la couche d'abradable représentée sur la figure 2.

La figure 7 représente une section du stator selon l'axe 7-7 tracé sur la figure 4. Une aube de caisson 42 est visible avec une patte d'ancrage 50 intégrée dans l'épaisseur d'une virole, éventuellement la virole externe 30.

Au moins une ou chaque patte d'ancrage 50 peut être intégrée dans l'épaisseur de la virole 30. L'épaisseur radiale de la patte d'ancrage 50 est inférieure ou égale à l'épaisseur de la virole 30, préférentiellement inférieure ou égale à la moitié de l'épaisseur de la virole. La surface externe de la patte d'ancrage peut affleurer la surface externe de la virole, éventuellement en formant une continuité de surface. Eventuellement, l'aube comprend une liaison radiale entre la ou chaque patte d'ancrage 50 et sa pale aérodynamique présente dans le flux.

Au moins une ou chaque patte d'ancrage 50 peut s'étendre parallèlement à la virole 30. La patte d'ancrage 50 peut s'étendre généralement perpendiculairement par rapport à l'axe d'empilement des profils aérodynamiques de l'aube. La position à l'extérieur de la patte d'ancrage favorise une rétention radiale de l'aube à la virole.

La description qui vient d'être faite s'inscrit dans le contexte d'une virole externe, cependant elle peut également être transposée à une virole interne, éventuellement en effectuant une inversion selon la direction radiale.

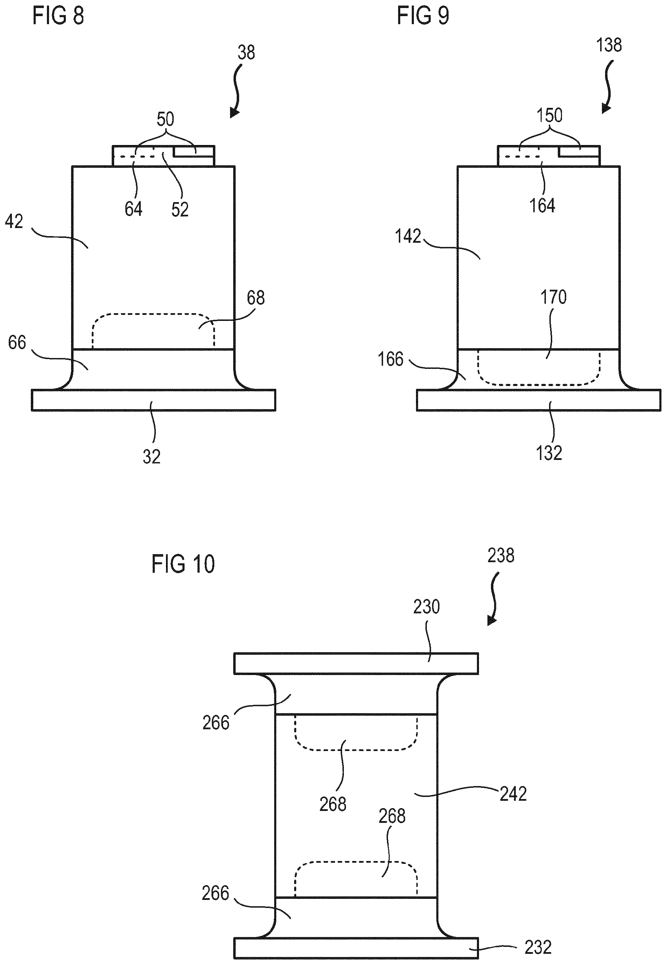

La figure 8 représente un segment angulaire 38 de stator selon le premier mode de réalisation de l'invention. Une aube de caisson 42 est ancrée à une virole interne à l'aide d'un moignon 66.

L'une des extrémités d'au moins une ou de chaque aube de caisson 42 est fixée à l'une des viroles, par exemple la virole interne 32, à l'aide de moignons d'ancrage 66. Ladite virole 32 présente des moignons 66 formés à sa surface et s'étendant vers l'aube. Chaque moignon 66 peut présenter une aile d'ancrage 68 dans son prolongement, dont la surface peut être striée ou percée pour augmenter l'ancrage, mais dont la section est réduite. L'ancrage des aubes 42 aux viroles 32 peut être mixte, un côté des aubes est ancré à l'aide de pattes d'ancrage 50, l'autre à l'aide de moignons 66.

La figure 9 représente un secteur angulaire aubagé 138 selon un deuxième mode de réalisation de l'invention. Cette figure 9 reprend la numérotation des figures précédentes pour les éléments identiques ou similaires, la numération étant toutefois incrémentée de 100. Des numéros spécifiques sont utilisés pour les éléments spécifiques à ce mode de réalisation. Une aube de caisson 142 est ancrée à une virole à l'aide d'un moignon 166.

La virole, par exemple interne 132 peut être surmoulée sur l'extrémité d'au moins une ou de chaque aube de caisson 142. Au moins une ou chaque aube 142 peut présenter une extrémité autour de laquelle est formé un moignon 166 d'ancrage de la virole 132. Les aubes peuvent être en métal, tel du titane, et la virole 132 peut être en matériau polymère tel un matériau composite à matrice organique. Au moins un ou chaque moignon 166 peut former une fente 170 dans laquelle est ancrée l'extrémité de l'aube de caisson 142.

La figure 10 représente un secteur angulaire aubagé 238 selon un troisième mode de réalisation de l'invention. Cette figure 10 reprend la numérotation des figures précédentes pour les éléments identiques ou similaires, la numération étant toutefois incrémentée de 200. Le caisson est représenté en coupe axiale.

Le secteur 238 comprend deux viroles (230 ; 232) entre lesquelles s'étendent plusieurs aubes de caisson 242. Ces aubes sont ancrées aux viroles à l'aide de moignons 266 formés sur la virole interne 232 et la virole externe 230. Les moignons 266 s'étendent radialement l'un vers l'autre, dans la veine délimitée par le secteur. Les moignons 266 peuvent comprendre des fentes d'ancrage et/ou des ailes d'ancrage.

Les viroles (230 ; 232) peuvent être réalisées en matériau composites, et les aubes peuvent être en titane. Eventuellement, les aubes 242 peuvent être en matériaux composites.

## Revendications

1. Secteur angulaire (38 ; 138 ; 238) de stator aubagé de turbomachine axiale (2), notamment de compresseur (4 ; 6), le secteur comprenant :
- une virole externe (30 ; 230) en forme d'arc de cercle et destinée à être montée sur un carter (28) de la turbomachine,
- une virole interne (32 ; 132 ; 232) en forme d'arc de cercle,
- une rangée d'aubes statoriques (42 ; 142 ; 242) s'étendant radialement entre les viroles, les aubes étant ancrées aux viroles de sorte à ce que le secteur forme un caisson aubagé (38 ; 138 ; 238) apte à délimiter une veine entre les viroles,
**caractérisé en ce qu'**au moins une ou chaque virole (30 ; 38 ; 138 ; 230 ; 238) comprend un moignon d'ancrage (66 ; 166 ; 266) d'une des aubes de caisson formé à la surface de la virole, le moignon étant dans le prolongement radial de l'aube en faisant saillie dans la veine.

2. Secteur (38 ; 138 ; 238) selon la revendication 1, **caractérisé en ce que** la ou chaque virole (30; 38 ; 138 ; 230; 238) comprend plusieurs moignons d'ancrage (66 ; 166 ; 266) d'aubes disposés en rangée, les moignons d'ancrage étant des fourreaux (166) dans lesquels sont ancrées les aubes, et/ou les moignons (66 ; 266) comprennent des ailes (68 ; 268) enveloppées par les aubes (42 ; 142 ; 242).

3. Turbomachine axiale (2) comprenant des secteurs angulaires de stator (38 ; 138 ; 238), **caractérisée en ce qu'**au moins un ou chaque secteur est conforme à l'une des revendications 1 à 2, la turbomachine (2) comprenant un carter (28) sur lequel sont fixés les secteurs angulaires et des aubes de jonction (44) placées entre les secteurs de stator (38 ; 138 ; 238) de sorte à former une alternance, les aubes de jonctions (44) étant fixées au carter (28) et aux secteurs de stator.

## Patentansprüche

1. Winkelsektor (38; 138; 238) eines Schaufelständers für eine axiale Turbomaschine (2), insbesondere für einen Kompressor (4; 6), wobei der Sektor Folgendes umfasst:
- eine äußere kreisbogenförmige Ferrule (30; 230), die dazu bestimmt ist, an einem Gehäuse (28) der Turbomaschine befestigt zu werden,
- eine innere kreisbogenförmige Ferrule (32; 132; 232),
- eine Reihe von Statorschaufeln (42; 142; 242), die radial zwischen den Ferrulen angeordnet sind, wobei die Schaufeln an den Ferrulen so verankert sind, dass der Sektor eine Schaufelkassette (38; 138; 238) bildet, die eine Vene zwischen den Deckbändern abgrenzen kann,
**dadurch gekennzeichnet, dass** mindestens eine oder jede der Ferrulen (30; 38; 138; 230; 238) mit einer Nabe (66; 166; 266) zur Verankerung einer der Schaufeln der Kassette versehen ist, die auf der Oberfläche der Ferrule ausgebildet ist, wobei die Nabe in der radialen Verlängerung der aus der Vene herausragenden Schaufel liegt.

2. Sektor (38; 138; 238) nach Anspruch 1, **dadurch gekennzeichnet, dass** die oder jede Ferrule (30; 38; 138; 230; 238) eine Vielzahl von in einer Reihe angeordneten Naben (66; 166; 266) zur Verankerung der Schaufeln aufweist, wobei die Naben (66; 266) Schalen (166) sind, in denen die Schaufeln verankert sind, und/oder die Naben (66; 266) mit Rippen (68; 268) versehen sind, die von den Schaufeln (42; 142; 242) umwickelt werden.

3. Axiale Turbomaschine (2) mit Winkelsektoren (38; 138; 238) des Stators, **dadurch gekennzeichnet, dass** mindestens minderstens einer oder jeder Sektor einem der Ansprüche 1 bis 2 entspricht, wobei die Turbomaschine (2) ein Gehäuse (28), an dem die Winkelsektoren befestigt sind, und Verbindungsschaufeln (44) aufweist, die abwechselnd zwischen den Statorsektoren (38; 138; 238) angeordnet sind, wobei die Verbindungsschaufeln (44) an dem Gehäuse (28) und an den Statorsektoren befestigt sind.

## Claims

1. Angular sector (38; 138; 238) of a bladed stator of an axial turbine engine (2), particularly of a compressor (4; 6), the sector comprising:
- an external collar (30; 230) in the form of a circular arc intended to be mounted on a casing (28) of the turbine engine,
- an internal collar (32; 132; 232) in the form of a circular arc,
- a row of stator blades (42; 142; 242) extending radially between the collars, the blades being anchored in the collars in such a manner that the sector forms a bladed box (38; 138; 238) able to delimit a vein between the collars,
**characterized in that** at least one or each collar (30; 38; 138; 230; 238) comprises an anchoring foot (66; 166; 266) of one of the blades of the bladed box, formed on the surface of the collar, the anchoring foot being in the radial extension of the blade by protruding in the vein.

2. Sector (38; 138; 238) according to claim 1, **characterized in that** the or each collar (30; 38; 138; 230; 238) comprises several anchoring feet (66; 166; 266) of the blades arranged in row, the anchoring feet being sheaths (166) into which the blades are anchored, and/or the anchoring feet (66; 166) comprising wings (68; 268) surrounded by the blades (42; 142; 242).

3. Axial turbine engine (2) comprising stator angular sectors (38; 138; 238), **characterized in that** at least one or each sector is according to one of claims 1 to 2, the turbine engine (2) comprising a casing (28) onto which the angular sectors are fixed and connecting blades (28) are arranged between the stator sectors (38; 138; 238) so as to form an alternation, the connecting blades (44) being fixed to the casing (28) and to the stator sectors.
